# FASCICULE DE BREVET EUROPEEN

(11) **EP 3 617 131 B1**
(45) Date de publication et mention de la délivrance du brevet: **21.05.2025**
(21) Numéro de dépôt: 19193867.9
(22) Date de dépôt: 27.08.2019
(51) Int. Cl.: B66F 13/00, F16M 11/10, F16M 11/22, F16M 11/28, B60S 9/22

(54) **CHAPE, SYSTÈME DE LEVAGE ET POSAGE COMPRENANT UNE TELLE CHAPE ET PROCÉDÉ DE LEVAGE ET POSAGE D'UN VÉHICULE**
GABELKOPF, HEBE- UND VERLEGESYSTEM, DAS EINEN SOLCHEN GABELKOPF UMFASST, HEBE- UND VERLEGESYSTEM FÜR FAHRZEUG
YOKE, SYSTEM FOR LIFTING AND SETTING DOWN COMPRISING SUCH A YOKE AND METHOD FOR LIFTING AND SETTING DOWN OF A VEHICLE

(30) Priorité: 28.08.2018 FR 1857706
(43) Date de publication de la demande: 04.03.2020
(73) Titulaire: Arquus, 78000 Versailles (FR)
(72) Inventeur: HANNA, Charbel, 78530 BUC (FR); HERUBEL, Laurent, 28210 CROISILLES (FR)
(74) Mandataire: Lavoix

(56) Documents cités:
- DE-U1- 8 904 647
- FR-A- 1 414 061
- FR-A- 464 173
- US-A- 6 053 477
- US-B2- 9 850 115

## Description

La présente invention concerne une chape de liaison d'un véhicule avec une chandelle, un système de levage et posage comprenant une telle chape, et un procédé de levage et posage d'un véhicule utilisant un tel système de levage et posage.

La maintenance des véhicules lourds, notamment les véhicules militaires, nécessite le levage et la mise en hauteur du véhicule pour les travaux sous le châssis. Lors du levage, un moyen de levage est utilisé pour soulever le véhicule et des éléments de soutien, comme des chandelles, sont mis en place. Cela peut nécessiter la présence, même rapide, d'opérateurs sous le véhicule en hauteur ce qui implique des problèmes de sécurités notamment dans le cas de véhicules très lourds.

DE 89 04 647 décrit un système de levage et une chape pour le levage de véhicule ou autres charges, comprenant une chandelle ayant un mécanisme de levage et une plaque de fixation munie de trous. La chape comprend un bâti, un axe de reprise et une interface de fixation munie de trous pour la fixation sur la plaque de fixation.

C'est à ces inconvénients qu'entend remédier l'invention en proposant une chape de liaison permettant de limiter les risques pour les personnes effectuant le levage du véhicule.

A cet effet, l'invention concerne une chape de liaison d'un véhicule avec une chandelle d'un système de levage et posage, comportant :
- un bâti, sur lequel sont prévus :
   - un axe de reprise adapté pour s'insérer dans un anneau d'arrimage d'un véhicule; et
   - une interface de fixation sur une chandelle.

Cette chape est caractérisée en ce que l'interface de fixation sur une chandelle est formée par un logement creux adapté pour recevoir une tête d'une chandelle, et une bride de maintien de la tête de chandelle dans le logement creux.

Grâce à l'invention, le véhicule peut être levé dans de meilleures conditions de sécurité. Les chandelles peuvent être attachées de façon pivotante au véhicule grâce à la liberté de pivotement des chapes et ne nécessitent donc pas d'être positionnées sous le véhicule levé.

Selon des aspects avantageux mais non obligatoires de l'invention, une telle chape peut incorporer une ou plusieurs des caractéristiques suivantes, prises selon toute combinaison techniquement admissible :
- Le bâti est formé par deux ailes parallèles définissant un espace de réception d'un anneau d'arrimage.
- L'axe de reprise traverse les deux ailes parallèles et est retenu dans le bâti par une goupille.
- La bride de maintien comporte deux tiges de blocage de la tête de chandelle adaptées pour être disposées de part et d'autre d'un axe central de la chandelle.
- La bride de maintien est coulissante par rapport au bâti, et la chape comporte un moyen de verrouillage de la bride de maintien en position dans le bâti.
- La bride de maintien comporte une poignée de manipulation.
- Le bâti comporte au moins une poignée de manipulation.

L'invention concerne également un système de levage et posage d'un véhicule, ce véhicule étant équipé d'une paire d'anneaux d'arrimage sur un côté avant et d'une paire d'anneaux d'arrimage sur un côté arrière. Ce système de levage et posage est caractérisé en ce qu'il comprend :
- quatre chapes de liaison telles que définies ci-avant, chacune des chapes étant fixée à l'un des anneaux d'arrimage du véhicule;
- quatre chandelles équipées de roulettes, chacune des chandelles étant fixée à l'une des chapes,
et en ce que :
- les chandelles sont initialement inclinées et positionnées en dehors d'une emprise au sol du véhicule;
- lorsque le véhicule est levé, les chandelles se redressent progressivement par pivotement des chapes par rapport aux anneaux d'arrimage, les roulettes des chandelles roulant contre un sol sur lequel le véhicule est initialement stationné ;
- en fin de levage, les chandelles sont positionnées par leur base verticalement par rapport au sol.

Ce système présente l'avantage d'éviter la présence de personnes sous l'emprise au sol du véhicule lors de son levage, ce qui améliore la sécurité.

L'invention concerne également un procédé de levage et posage d'un véhicule, utilisant un système de levage et posage tel que mentionné ci-dessus, caractérisé en ce qu'il comprend des étapes consistant à :
- solidariser les chapes aux anneaux d'arrimage;
- fixer les chandelles sur les chapes;
- soulever le véhicule jusqu'au redressement des chandelles verticalement par rapport au sol de manière que ces chandelles reposent sur le sol par leur base.

L'invention sera mieux comprise et d'autres avantages de celle-ci apparaîtront plus clairement à la lumière de la description qui va suivre d'une chape, d'un système de levage et posage et d'un procédé de levage et posage d'un véhicule conformes à son principe, faite à titre d'exemple non limitatif en référence aux dessins annexés, dans lesquels :
- les figures 1 et 2 sont deux vues en perspective sous deux angles différents d'une chape conforme à l'invention ;
- la figure 3 est une vue latérale d'un anneau d'arrimage d'un véhicule ;
- la figure 4 est une vue latérale de l'anneau d'arrimage de la figure 3 auquel est lié la chape des figures 1 et 2 ;
- la figure 5 est une vue latérale d'une chape fixée à une chandelle appartenant à un système de levage conforme à l'invention ;
- la figure 6 est une vue en perspective d'une partie supérieure de la chandelle et de la chape de la figure 5 ;
- la figure 7 est une vue de dessous de la partie supérieure représentée à la figure 6 ;
- les figures 8 à 10 sont des vues latérales d'un véhicule et d'un système de levage et posage lors de trois étapes de levage et posage du véhicule.

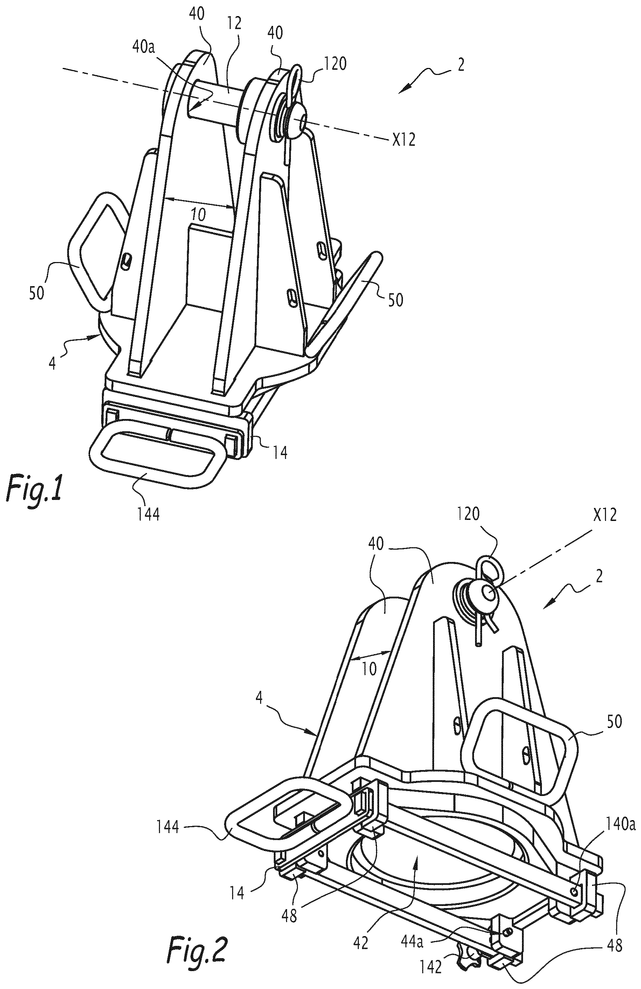

Une chape 2 de liaison est représentée sur les figures 1 et 2. La chape de liaison 2 est destinée à solidariser un véhicule V, tel qu'un véhicule militaire, ou bien tout type de véhicule lourd, avec un système de levage et posage 100. De tels véhicules comportent généralement des anneaux d'arrimage 6 utilisés pour le remorquage ou l'arrimage sur un autre véhicule de transport.

La chape 2 comporte un bâti 4, sur lequel sont prévus un axe de reprise 12 sur un anneau d'arrimage 6 du véhicule V, et une interface de fixation 42 sur une chandelle 8 du système de levage 100.

Le bâti 4 est formé par deux ailes parallèles 40 définissant entre elles un espace de réception 10 d'un anneau d'arrimage 6.

L'axe de reprise 12 traverse les deux ailes parallèles 40 est adapté pour s'insérer dans un trou 60 de l'anneau d'arrimage 6. L'axe de reprise 12 traverse l'espace de réception 10. La chape 2 comporte une goupille 120 qui retient l'axe de reprise 12 dans le bâti 4 en empêchant sa translation dans son logement. L'axe de reprise 12 permet la libre rotation de la chape 2 par rapport à l'anneau d'arrimage 6, autour d'un axe de rotation X12 correspondant à l'axe central de l'axe de reprise 12, tout en supportant une partie du poids du véhicule V.

L'interface de fixation 42 sur une chandelle 8 est formée par un logement creux adapté pour recevoir la tête 80 d'une chandelle 8, et une bride de maintien 14 de la tête de chandelle 80 dans le logement creux 42. Le logement creux 42 est pratiqué dans le bâti 4.

La bride de maintien 14 comporte deux tiges de blocage 140 de la tête de chandelle 80, adaptées pour être disposées de part et d'autre d'un axe central Z8 de la chandelle 8, qui est perpendiculaire à la tête de chandelle 80.

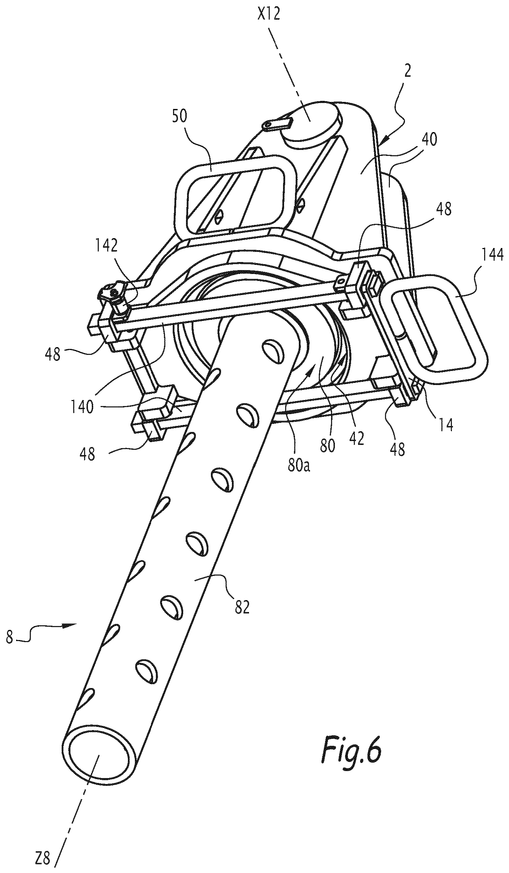

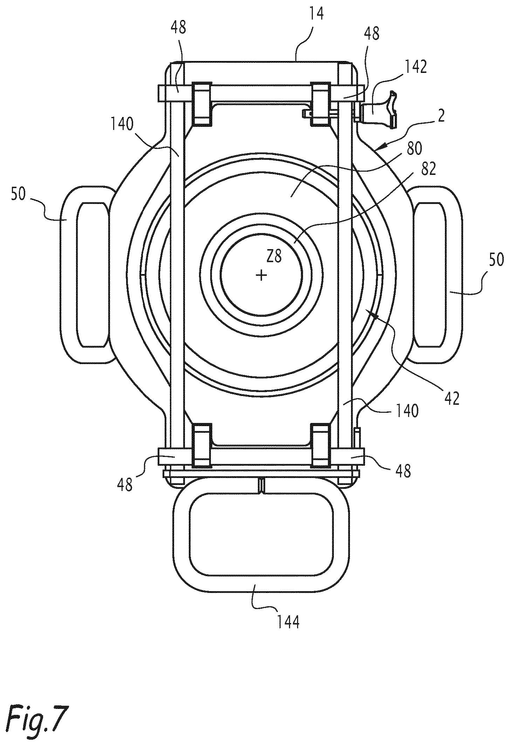

La bride de maintien 14 est coulissante par rapport au bâti 4. Le bâti 4 comporte des pièces en saillie 48 dans lesquelles les tiges 140 sont insérées avec possibilité de coulissement selon l'axe des tiges 140. La chape 2 comporte au moins un moyen de verrouillage de la bride de maintien 14 en position dans le bâti 4. Ce moyen de verrouillage peut être, selon un exemple visible aux figures 2, 6 et 7, une broche à bille 142 insérée dans un trou 140a d'une des tiges 140 et dans un trou 44a du bâti 4. Cette broche à billes 142, en solidarisant le bâti 4 aux tiges 140, empêche le coulissement de la bride 14 en dehors du bâti 4.

La bride de maintien 14 comporte une poignée de manipulation 144. Cette poignée 144 est utilisable par un opérateur pour effectuer le coulissement de la bride 14, pour la démonter ou la remonter dans le bâti 4.

Le bâti 4 comporte également au moins une poignée de manipulation. Dans cet exemple, deux poignées 50 sont prévues sur le bâti 4 de part et d'autre des ailes 40.

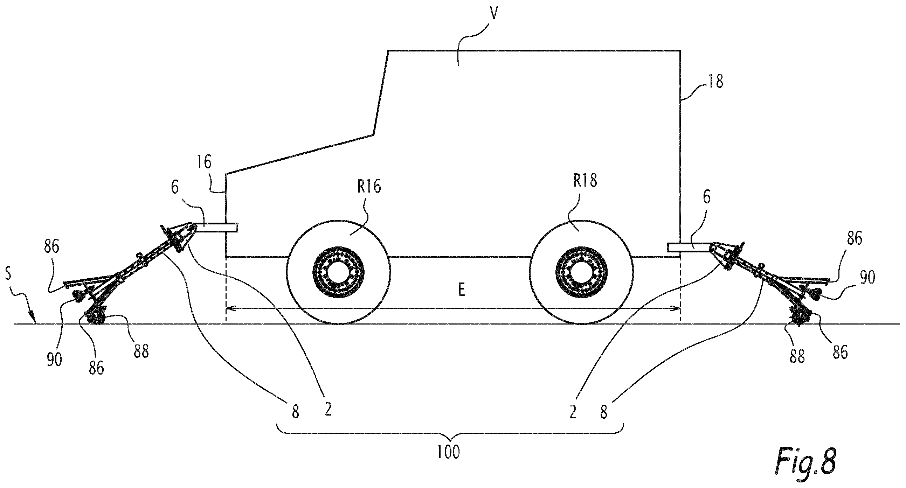

Le véhicule V représenté aux figures 8 à 10 est équipé d'une paire d'anneaux d'arrimage 6 sur un côté avant 16 et d'une paire d'anneaux d'arrimage 6 sur un côté arrière 18.

Le système de levage et posage 100 comprend quatre chapes 2, chacune étant fixée à l'un des anneaux d'arrimage 6 du véhicule V, ainsi que quatre chandelles 8, chacune des chandelles 8 étant fixée à l'une des chapes 2. Sur les figures 8 à 10seulement deux anneaux d'arrimage 6, deux chapes 2 et deux chandelles 8 sont visibles, le reste étant masqué de l'autre côté du véhicule V.

Les chandelles 8 comportent un fût central 80 qui s'étend autour de l'axe central Z8, et au bout duquel se trouve la tête de chandelle 80. Les chandelles 8 comportent des jambes 84 qui s'étendent de façon divergente à partir du fût central 82, à l'opposé de la tête de chandelle 80, et dont les extrémités présentent des plaques 86 d'appui au sol formant une base de la chandelle 8. Les jambes 84 sont au nombre de trois minimum.

Les jambes 84 sont équipées de roulettes 88 de roulage au sol, qui permettent de déplacer les chandelles 8 dans une position inclinée par rapport au sol. Les roulettes 88 sont fixées aux jambes 84 avec des supports 84a s'étendant perpendiculairement à l'axe Z8, et au voisinage des plaques d'extrémité 86.

Les chandelles 8 peuvent également comporter des roulettes d'appoint 90, permettant de déplacer les chandelles 8 lorsqu'elles sont à la verticale et que les roulettes 88 ne sont plus utilisables. Les roulettes 90 comportent des supports 92 qui s'étendent parallèlement à l'axe Z8. Les supports 92 sont mobiles par rapport au fût central 82 et peuvent être positionnés par rapport au fût central 82 de telle manière que les roulettes 90 dépassent des plaques d'extrémité 86 pour permettre le roulage au sol. Lorsque les roulettes 90 doivent être escamotées pour que les chandelles 8 reposent sur le sol par les plaques d'extrémité 86, les supports 92 sont rétractés de telle manière que les roulettes 90 sont en retrait des plaques d'extrémité 86.

Les chandelles 8 peuvent être télescopiques, le fût central 82 étant en deux parties réglables en position l'une par rapport à l'autre selon l'axe Z8.

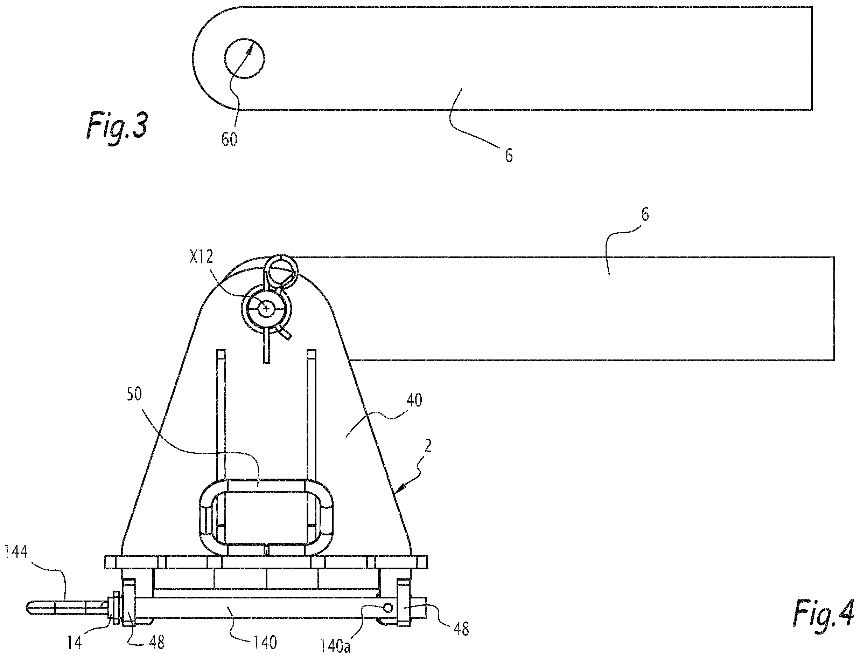

Le fonctionnement du système de levage et posage 100, et un procédé de levage et posage associé, sont décrits en référence aux figures 4 à 10.

Le véhicule V est initialement stationné sur un sol S. Le véhicule V comprend des roues avant R16 et des roues arrière R18 qui reposent sur le sol S.

Le procédé de levage et posage du véhicule V comprend une première étape consistant à solidariser les chapes 2 aux anneaux d'arrimage 6. Pour cela, les axes de reprise 12 sont démontés des chapes 2. Les ailes 40 des chapes 2 sont passées autour des anneaux d'arrimage 6 de manière que les trous 60 soient alignés avec des trous 40a des ailes 40. Les axes de reprise 12 sont ensuite montés à travers les trous 40a et le trou 60, puis verrouillés avec les goupilles 120. Les chapes 2 sont à ce moment articulées avec pivotement sur le véhicule V (figure 4).

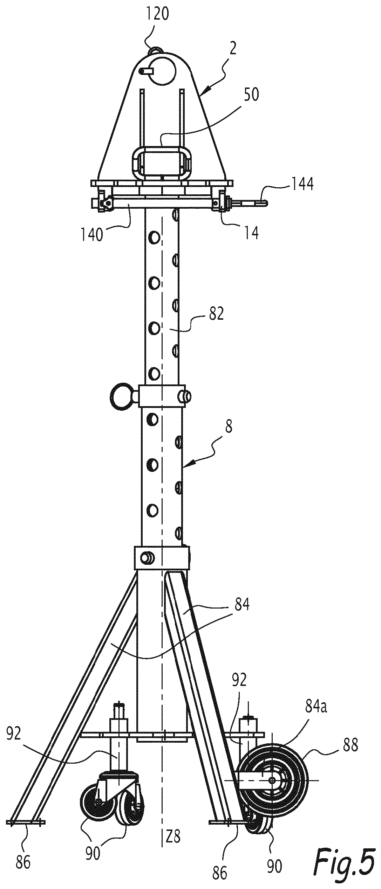

Dans une seconde étape, les chandelles 8 sont fixées sur les chapes 2. Les brides 14 sont déverrouillées des bâtis 4 par retrait des broches à billes 142, et extraites par coulissement. Les têtes 80 des chandelles 8 sont mises en place dans les logements creux 42, dont la forme est complémentaire à celles des têtes de chandelle 80. Cette forme est circulaire dans l'exemple représenté, mais peut être différente. Les brides 14 sont ensuite remontées sur le bâti 4, en insérant les tiges 140 autour du fût central 82, d'un côté 80a des têtes de chandelles 80 opposé aux logements creux 42, et à travers les pièces 48. Une fois complètement insérées dans le bâti 4, les brides 14 sont verrouillées par mise en place des broches à billes 142. Dans cette configuration (figures 5 à 7) les chandelles 8 sont liées aux chapes 2. Le levage du véhicule V peut alors débuter.

Initialement, les chandelles 8 sont inclinées par rapport au sol S et positionnées en dehors d'une emprise au sol E du véhicule V (figure 8). Les chandelles 8 reposent sur le sol S par les roulettes 88.

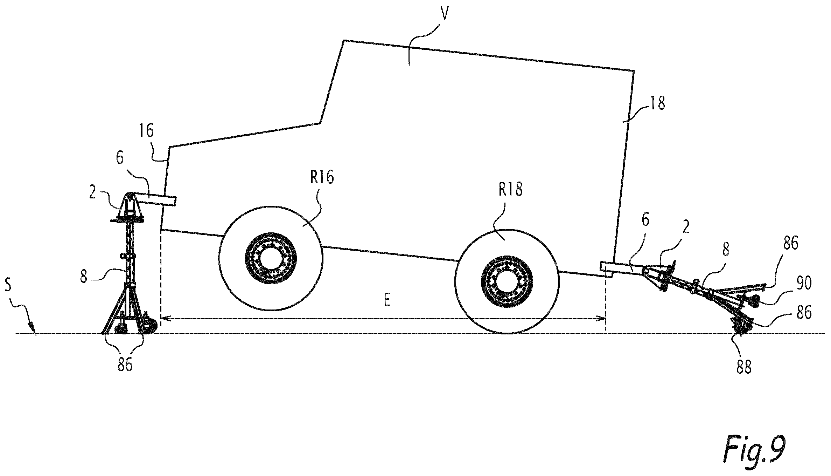

Dans une nouvelle étape du procédé de levage, le véhicule V est soulevé avec un moyen de levage donné. Le côté avant 16 est soulevé en premier dans cet exemple. Lorsque le véhicule V est levé, les chandelles 8 se redressent progressivement par pivotement des chapes 2 par rapport aux anneaux d'arrimage 6, les roulettes 88 des chandelles 8 roulant contre le sol S. Les jambes 84 se rapprochent du véhicule V, et les roulettes 90 sont automatiquement escamotées une fois en charge. Les chandelles 8 trouvent naturellement leur position d'équilibre lorsque les roulettes 90 ne touchent plus le sol. En fin de levage, les chandelles 8 sont positionnées par leur base formée par les plaques d'extrémité 86, verticalement par rapport au sol S (figure 9). Les roulettes 90 sont escamotées. Les roues avant R16 ne reposent plus sur le sol S.

La même opération est renouvelée avec le côté arrière 18 du véhicule V. Le véhicule V repose alors par l'avant et l'arrière sur les chandelles 8. Le moyen utilisé pour le levage peut alors être désactivé.

A aucun moment du levage il n'est nécessaire d'effectuer des opérations sous l'emprise au sol E du véhicule V. Toutes les manipulations de montage des chapes 2 et des chandelles 8 se font lorsque le véhicule V repose sur le sol S, et le redressement progressif des chandelles 8 peut être contrôlé par des opérateurs à l'écart de l'emprise au sol E. La sécurité des opérateurs lors du levage et posage du véhicule V est donc assurée.

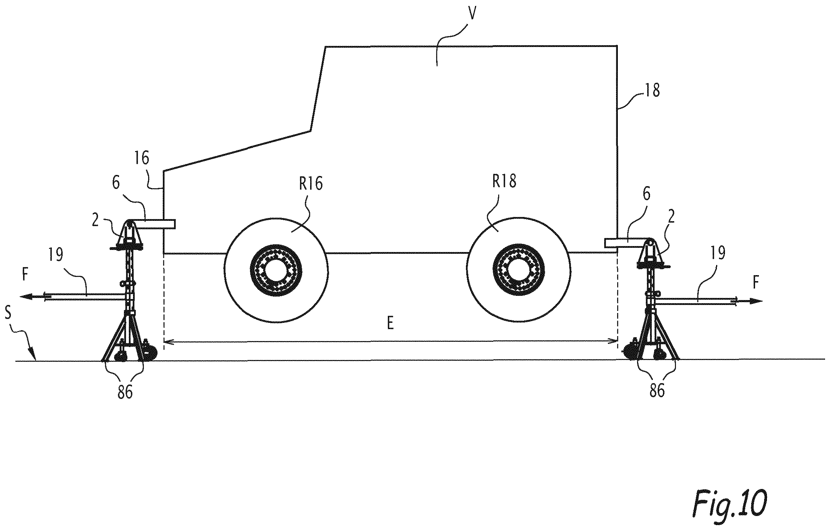

Lors de la repose du véhicule V sur le sol S, les étapes du procédé se déroulement globalement en sens inverse : un premier côté du véhicule V est levé, et les roulettes 90 des chandelles 8 se trouvant de ce côté sont déployées, de manière à permette l'initiation de l'inclinaison contrôlée des chandelles 8. Des sangles 19 doivent être utilisées pour écarter les chandelles 8 de leur position verticale en exerçant un effort de traction selon les flèches F à la figure 10 pour les éloigner du véhicule V. Une fois inclinées, les chandelles 8 reposent à nouveau sur les roulettes 88, et la descente du véhicule V peut être contrôlée, les chandelles 8 s'inclinant et s'écartant progressivement.

Une fois le véhicule V déposé sur le sol S, les chandelles 8 et les chapes 2 sont démontées selon les principes décrits plus haut.

Selon une variante non représentée, le levage du véhicule V peut être débuté en commençant par l'arrière au lieu de l'avant. Le levage du véhicule V peut être également réalisé en une fois si un moyen de levage adéquat est disponible.

## Revendications

1. Chape (2) de liaison d'un véhicule (V) avec une chandelle (8) d'un système de levage et posage (100), comportant :
- un bâti (4), sur lequel sont prévus :
- un axe de reprise (12) adapté pour s'insérer dans un anneau d'arrimage (6) d'un véhicule (V); et
- une interface de fixation (42, 14) sur une chandelle (8),
**caractérisée en ce que** l'interface de fixation sur une chandelle (8) est formée par un logement creux (42) adapté pour recevoir une tête (80) d'une chandelle (8), et une bride de maintien (14) de la tête de chandelle (80) dans le logement creux (8).

2. Chape selon la revendication 1, **caractérisée en ce que** le bâti (4) est formé par deux ailes (40) parallèles définissant un espace de réception (10) d'un anneau d'arrimage (6).

3. Chape selon la revendication 2, **caractérisée en ce que** l'axe de reprise (12) traverse les deux ailes (40) parallèles et est retenu dans le bâti (4) par une goupille (120).

4. Chape selon l'une des revendications précédentes, **caractérisée en ce que** la bride de maintien (14) comporte deux tiges (140) de blocage de la tête de chandelle (80) adaptées pour être disposées de part et d'autre d'un axe central (Z8) de la chandelle (8).

5. Chape selon l'une des revendications précédentes, **caractérisée en ce que** la bride de maintien (14) est coulissante par rapport au bâti (4) et **en ce que** la chape (2) comporte un moyen de verrouillage (142) de la bride de maintien (14) en position dans le bâti (4).

6. Chape selon l'une des revendications précédentes, **caractérisée en ce que** la bride de maintien (14) comporte une poignée de manipulation (144).

7. Chape selon l'une des revendications précédentes, **caractérisée en ce que** le bâti (4) comporte au moins une poignée de manipulation (50).

8. Système de levage et posage (100) d'un véhicule (V), ce véhicule (V) étant équipé d'une paire d'anneaux d'arrimage (6) sur un côté avant (16) et d'une paire d'anneaux d'arrimage (6) sur un côté arrière (18), le système de levage et posage (100) étant **caractérisé en ce qu'**il comprend :
- quatre chapes (2) selon l'une quelconque des revendications 1 à 7, chacune des chapes étant fixée à l'un des anneaux d'arrimage (6) du véhicule (V);
- quatre chandelles (8) équipées de roulettes (88, 90), chacune des chandelles (8) étant fixée à l'une des chapes (2),
et **en ce que** :
- les chandelles (8) sont initialement inclinées et positionnées en dehors d'une emprise au sol (E) du véhicule (V) ;
- lorsque le véhicule (V) est levé, les chandelles (8) se redressent progressivement par pivotement des chapes (2) par rapport aux anneaux d'arrimage (6), les roulettes (88) des chandelles (8) roulant contre un sol (S) sur lequel le véhicule (V) est initialement stationné ;
- en fin de levage, les chandelles (8) sont positionnées par leur base (86) verticalement par rapport au sol (S).

9. Procédé de levage et posage d'un véhicule (V) utilisant un système de levage et posage (100) selon la revendication 8, **caractérisé en ce qu'**il comprend des étapes consistant à :
- solidariser les chapes (2) aux anneaux d'arrimage (6);
- fixer les chandelles (8) sur les chapes (2);
- soulever le véhicule (V) jusqu'au redressement des chandelles (8) verticalement par rapport au sol (S) de manière que ces chandelles (8) reposent sur le sol (S) par leur base (86).

## Patentansprüche

1. Gabelkopf (2) zur Verbindung eines Fahrzeugs (V) mit einem Stückbock (8) eines Hebe- und Absetzsystems (100), umfassend:
- ein Gestell (4), an dem Folgendes bereitgestellt ist:
- eine Aufnahmeachse (12), der angepasst ist, um in eine Verzurröse (6) eines Fahrzeugs (V) eingeführt zu werden; und
- eine Befestigungsschnittstelle (42, 14) an einem Stützbock (8),
**dadurch gekennzeichnet, dass** die Befestigungsschnittstelle an einem Stützbock (8) durch eine hohle Aufnahme (42), die angepasst ist, um einen Kopf (80) eines Stützbocks (8) aufzunehmen, und einen Halteflansch (14) des Kopfs des Stützbocks (80) in der hohlen Aufnahme (8) gebildet ist.

2. Gabelkopf nach Anspruch 1, **dadurch gekennzeichnet, dass** das Gestell (4) von zwei parallelen Flügeln (40) gebildet ist, die einen Aufnahmeraum (10) für eine Verzurröse (6) definieren.

3. Gabelkopf nach Anspruch 2, **dadurch gekennzeichnet, dass** die Aufnahmeachse (12) durch die zwei parallelen Flügel (40) verläuft und durch einen Stift (120) in dem Gestell (4) gehalten wird.

4. Gabelkopf nach einem der vorherigen Ansprüche, **dadurch gekennzeichnet, dass** der Halteflansch (14) zwei Stangen (140) zum Arretieren des Gabelkopfs (80) aufweist, die angepasst sind, um auf beiden Seiten einer Mittelachse (Z8) der Gabel (8) angeordnet zu werden.

5. Gabelkopf nach einem der vorherigen Ansprüche, **dadurch gekennzeichnet, dass** der Halteflansch (14) in Bezug auf das Gestell (4) verschiebbar ist und dass der Gabelkopf (2) eine Verriegelungseinrichtung (142) des Halteflanschs (14) an der Position in dem Gestell (4) umfasst.

6. Gabelkopf nach einem der vorherigen Ansprüche, **dadurch gekennzeichnet, dass** der Halteflansch (14) einen Handhabungsgriff (144) umfasst.

7. Gabelkopf nach einem der vorherigen Ansprüche, **dadurch gekennzeichnet, dass** das Gestell (4) mindestens einen Handhabungsgriff (50) umfasst.

8. Hebe- und Absetzsystem (100) eines Fahrzeugs (V), wobei das Fahrzeug (V) mit einem Paar Verzurrösen (6) auf einer Vorderseite (16) und mit einem Paar Verzurrösen (6) an einer Rückseite (18) ausgestattet ist, wobei das Hebe- und Absetzsystem (100) **dadurch gekennzeichnet ist, dass** es Folgendes umfasst:
- vier Gabelköpfe (2) nach einem der Ansprüche 1 bis 7, wobei jeder der Gabelköpfe an einer der Verzurrösen (6) des Fahrzeugs (V) befestigt ist;
- vier Stützböcke (8), die mit Rollen (88, 90) ausgestattet sind, wobei jeder der Stützböcke (8) an einem der Gabelköpfe (2) befestigt ist,
und dadurch, dass:
- die Stützböcke (8) anfänglich geneigt und außerhalb einer Grundfläche (E) des Fahrzeugs (V) positioniert sind;
- wenn das Fahrzeug (V) angehoben wird, die Stützböcke (8) durch Schwenken der Gabelköpfe (2) in Bezug auf die Verzurrösen (6) allmählich aufgerichtet werden, wobei die Rollen (88) der Stützböcke (8) auf einem Boden (S) rollen, auf dem das Fahrzeug (V) ursprünglich geparkt war;
- wobei die Stützböcke (8) am Ende des Hebevorgangs mit ihrer Basis (86) vertikal zum Boden (S) positioniert werden.

9. Hebe- und Absetzverfahren eines Fahrzeugs (V) unter Verwendung eines Hebe- und Absetzsystems (100) nach Anspruch 8, **dadurch gekennzeichnet, dass** es die folgenden Schritte umfasst:
- Befestigen die Gabelköpfe (2) an den Verzurrösen (6);
- Befestigen der Stützböcke (8) an den Gabelköpfen (2);
- Anheben des Fahrzeugs (V), bis die Stützböcke (8) senkrecht zum Boden (S) aufgerichtet sind, sodass diese Stützböcke (8) mit ihrer Basis (86) auf dem Boden (S) aufliegen.

## Claims

1. A clevis (2) for connecting a vehicle (V) to a stanchion (8) of a lifting and positioning system (100), comprising:
- a frame (4), on which are provided:
- a take-up shaft (12) adapted to be inserted into a lashing ring (6) of a vehicle (V); and
- an interface (42, 14) for fastening onto a stanchion (8),
**characterised in that** the interface for fastening onto a stanchion (8) is formed by a hollow housing (42) adapted to receive a head (80) of a stanchion (8), and a flange (14) for retaining the stanchion head (80) in the hollow housing (8).

2. The clevis according to claim 1, **characterised in that** the frame (4) is formed by two parallel wings (40) defining a space (10) for receiving a lashing ring (6).

3. The clevis according to claim 2, **characterised in that** the take-up shaft (12) passes through the two parallel wings (40) and is held in the frame (4) by a pin (120).

4. The clevis according to one of the preceding claims, **characterised in that** the retaining flange (14) comprises two rods (140) for blocking the head of the stanchion (80) adapted to be arranged on either side of a central axis (Z8) of the stanchion (8).

5. The clevis according to one of the preceding claims, **characterised in that** the retaining flange (14) slides with respect to the frame (4) and **in that** the clevis (2) comprises a means (142) of locking the retaining flange (14) in position in the frame (4).

6. The clevis according to one of the preceding claims, **characterised in that** the retaining flange (14) comprises a handle (144).

7. The clevis according to one of the preceding claims, **characterised in that** the frame (4) comprises at least one handle (50).

8. A lifting and positioning system (100) for a vehicle (V), the vehicle (V) being equipped with a pair of lashing rings (6) on a front side (16) and a pair of lashing rings (6) on a rear side (18), the lifting and positioning system (100) being **characterised in that** it comprises:
- four clevises (2) according to any one of claims 1 to 7, each of the clevises being fastened to one of the lashing rings (6) of the vehicle (V);
- four stanchions (8) equipped with castors (88, 90), each of the stanchions (8) being fastened to one of the clevises (2),
and **in that**:
- the stanchions (8) are initially inclined and positioned outside a footprint (E) of the vehicle (V);
- when the vehicle (V) is raised, the stanchions (8) are progressively raised by pivoting the clevises (2) relative to the lashing rings (6), the wheels (88) of the stanchions (8) rolling against a floor (S) on which the vehicle (V) is initially parked;
- at the end of lifting, the stanchions (8) are positioned by their base (86) vertically in relation to the ground (S).

9. A method of lifting and positioning a vehicle (V) using a lifting and positioning system (100) according to claim 8, **characterised in that** it comprises the steps of:
- securing the clevises (2) to the lashing rings (6);
- fastening the stanchions (8) to the clevises (2);
- raising the vehicle (V) until the stanchions (8) are vertical to the ground (S) so that the stanchions (8) rest on the ground (S) at their base (86).
